# EUROPEAN PATENT SPECIFICATION

(11) **EP 2 940 967 B1**
(45) Date of publication and mention of the grant of the patent: **14.02.2018**
(21) Application number: 14305646.3
(22) Date of filing: 30.04.2014
(51) Int. Cl.: H04L 12/751, H04L 29/08

(54) **Content-centric networking**
Inhaltzentriertes Netzwerken
Réseautage centré sur le contenu

(43) Date of publication of application: 04.11.2015
(73) Proprietor: ALCATEL LUCENT, 92100 Boulogne-Billancourt (FR)
(72) Inventor: Franck, Franck, Dublin, 15 (IE); Jul, Eric, Dublin, 15 (IE)
(74) Representative: Berthier, Karine

(56) References cited:
- WO-A1-2010/140938
- US-A1- 2013 215 756
- US-A1- 2014 089 454
- GIOVANNA CAROFIGLIO ET AL: "Joint hop-by-hop and receiver-driven interest control protocol for content-centric networks", INFORMATION-CENTRIC NETWORKING, ACM, 2 PENN PLAZA, SUITE 701 NEW YORK NY 10121-0701 USA, 17 August 2012 (2012-08-17), pages 37-42, XP058008096, DOI: 10.1145/2342488.2342497 ISBN: 978-1-4503-1479-4

## Description

### FIELD OF THE INVENTION

The present invention relates to content-centric network node methods, content-centric network nodes and computer program products.

### BACKGROUND

Content-centric networking is known. In such content-centric networking, a routing paradigm is provided for delivery of content in a data network. In particular, requests (known as interest packets) for content are made to network nodes within the content-centric network and, if a network node receiving that request has a copy of that content, then this content is routed back to the requesting node. However, if a network node does not have that content, then a copy of the request is stored by the network node and the request is promulgated through the network until the content is returned or, if no content is returned, then the requesting node may timeout and may retransmit the request. Typically, as the content is passed back to the requesting node, a copy of that content may be stored locally by network nodes in order that they have the content accessible, should a subsequent request for that content be made.

US 2013/0215756 A1 discloses a content cache managing method and apparatus for on-path caching in a content centric network in response to a request for that content. When the requested content is received by the cache, the cache may decide whether to delete existing cache data and replace it with the received content based on a calculated cache replacement factor value, If the cache is full and the cache replacement factor value of the received content exceeds that of the content already stored by the cache, then the content having the smallest cache replacement factor value may be deleted so that the received content may be stored. The cache replacement factor value is calculated by summing weights assigned to links over which the content passes, the weight link being determined by a distance (such as a hop count) that the content has been transmitted.

WO 2010/140938 A1 discloses a method and node for efficiently distributing electronic content in a content distribution network comprising a plurality of cache nodes. Links represent a communication cost which can vary significantly depending on the connection and distance between nodes. As each request for content is received by a node, a gain counter for that content may be incremented. When content is received, the cost factor for that content is determined, which is based on the condition of the links connecting the various cache nodes.

Although such an approach enables content to be provided, this is not without its own shortcomings.

Accordingly, it is desired to provide an improved technique for content-centric networking.

### SUMMARY

According to a first aspect, there is provided a method for a pre-caching network node of a content-centric network, as claimed in claim 1.

The first aspect recognizes that content distribution networks (CDN) are commonly used on the existing Internet to distribute the workload for delivering some piece of content across the network. A CDN is essentially a method of pre-caching content on multiple high-powered cache nodes that are closer to the consumer than the content producer is. Information-centric networks in general and content-centric networks in particular provide a generalized approach to such content caching in the network, but do not support pre-caching of content in the same way as existing CDNs. Caching in existing information or content-centric networks works on a request-response basis. The consumer that is interested in some piece of content issues an interest for it. The interest will propagate across nodes in the network and leave behind a trail of "breadcrumbs" on each node it passes through (typically, that an interest for that content has been received over a particular link). At some time, the interest will reach a node that holds the content that the interest is requesting. At that time, that node will create a content object containing the content, which the node then sends back along the same path that the interest arrived on. The content object will follow the breadcrumbs to the consumer and, upon arrival at the consumer, the content is extracted from the content object and delivered to the consumer. The caching of the content object in this example may occur at any node along the path that the content object takes from node holding the content to the consumer and the decision of whether or not to cache the content object at any point is up to each node. This ensures that cached copies of content flow towards the nodes requesting the content and thus subsequent requests for such content may be delivered quickly and efficiently from the cache along the path that the content object has taken.

However, the first aspect also recognizes that this approach has a number of drawbacks. First, content cannot be pre-cached. As the content object can only be routed along the path that its interest followed, any cached copies of the content object can only be made available after the interest has been received. However, in some instances, it is desirable to pre-populate caches before any requests for the content have been made. Secondly, content cannot be cached outside the path that the content object follows from the node that holds the content to the consumer. In some cases, the interest may arrive over costly or otherwise undesirable routes and any cached copies of the content object will thus also occur on these undesirable routes. This will, in the best case, lead to additional copies being stored on better routes as requests are made there or, in the worst-case, to over-utilization of the undesirable routes as they hold caches of popular content. Thirdly, allocating high-performance cache nodes in the network becomes difficult. Network infrastructure providers (such as Internet service providers, cellular operators and the like) may wish to provide large, efficient content caches in strategic locations on the network to improve service to their customers or to reduce costs from out-of-network traffic. This, however, becomes difficult when a content-centric network offers no way to direct the traffic in the network. There is no way to make sure that a cache node sees any particular piece of content without explicitly issuing an interest for it.

Accordingly, a network node method is provided. The network node may be a pre-caching network node for a content-centric network. The method may comprise the step of when, or in the event that, it is determined that selected or specified content is to be pre-cached by the pre-caching network note, a resistance value may be set to a negative value. That resistance value may be allocated to be used on incoming links with other network nodes when those incoming links carry packets associated with the selected content. In this way, the incoming links with other network nodes may be configured to encourage selected content to be transmitted over those links by applying a negative resistance which converts the normal cost of providing content over the link into a reward. This configuration to provide that content can be detected by the other network nodes, despite no interest for that content having been issued. This enables content to be pre-cached before any requests have been made, cached outside the path of any interest for that content and enables caches to be provided at strategic locations.

The resistance value identifies an adjustment to be made to a charge associated with the packets, the negative value causing an increase in the charge when traversing one of the incoming links, a magnitude of the charge value affecting how far the packets are able to propagate throughout the content-centric network. Accordingly, the resistance value can be utilized to increase the charge allocated to a packet when traversing the link in order to encourage the link to be selected to carry the packets.

In one embodiment, the resistance is set to a magnitude of negative value based on at least one of a priority for pre-caching the selected content and a propagation distance through the content-centric network. Accordingly, the magnitude or size of the negative resistance value can be used to control how far away (such as the number of hops) from the pre-caching node incoming links for other nodes are also set to a negative resistance value. For example, setting the amount of negative value to a first amount and setting the amount of negative value to a second amount, the first amount being more negative than the second amount will likely result in the propagation of a negative value of resistance for links when set at the first amount to travel further (more hops) from the pre-caching network node than when set at the second amount.

In one embodiment, each of the incoming links has a plurality of resistance values, each allocated for different selected content. Accordingly, the same link may be allocated different resistance values for different selected content. Also, it will be appreciated that the resistance values may not be bi-directional and so different resistance values may be set for the same content on incoming and outgoing links.

In one embodiment, the method comprises caching received selected content when the resistance value allocated to the selected content has a negative value. Accordingly, should the selected content be received and the resistance value on the incoming link which receives that content is a negative value, then the selected content may be cached.

In one embodiment, the setting the resistance value comprises transmitting an update message over each incoming link identifying the resistance value and the selected content. Accordingly, the change in resistance value may be communicated to other network nodes using an update message or in any other suitable way.

In one embodiment, the packets comprise at least one of an interest packet requesting the selected content and content packets carrying the content. The packets may comprise update packets.

According to a second aspect, there is provided a pre-caching network node of a content-centric network as claimed in claim 7.

In one embodiment, the resistance is set to a magnitude of negative value based on at least one of a priority for pre-caching the selected content and a propagation distance through the content-centric network.

In one embodiment, each of the incoming links has a plurality of resistance values, each allocated for different selected content.

In one embodiment, the logic is operable to cache received selected content when the resistance value allocated to the selected content has a negative value.

In one embodiment, the logic is operable to set the resistance value by transmitting an update message over each incoming link identifying the resistance value and the selected content.

In one embodiment, the packets comprise at least one of an interest packet requesting the selected content and content packets carrying the content. The packets may comprise update packets.

According to a third aspect, there is provided a method for a network node of a content-centric network as claimed in claim 8. Accordingly, should the resistance value be set to a negative value on an outgoing link, then the network node determines whether it has the content associated with that negative resistance value cached or not. In this way, the network node can respond to changes in the resistance value in order to facilitate pre-caching of that content. Should it be determined that the content is cached by the network node, then the content may be provided over the outgoing link which has the resistance set to a negative value. This enables the selected content to follow the path back to the pre-caching node.

In one embodiment, when it is determined that the selected content is not cached, the method comprises setting a resistance value allocated to incoming links with other network nodes when carrying packets associated with the selected content based on the resistance value allocated to the outgoing link. Accordingly, should it be determined that the selected content is not cached by the network node, then the resistance values for incoming links with other network nodes may be adjusted based on the resistance value of the outgoing link being set to a negative value. This enables the network node to attempt to propagate the negative value onto other links with other network nodes in an attempt to obtain the selected content. Also, even if the content is cached, the resistance values for incoming links with other network nodes may still be adjusted based on the resistance value of the outgoing link being set to a negative value unless the network node is the producer of the selected content so that it can be checked whether the selected content has been updated.

In one embodiment, the setting the resistance value comprises applying a positive value offset for each incoming link to the resistance value allocated to the outgoing link. Accordingly, the magnitude of the negative resistance value may be reduced by applying a positive value offset for each outgoing link. It will be appreciated that if the resultant resistance value for any particular link is still negative, then other network nodes will respond to that negative resistance value in a similar manner. However, should the application of the positive value render the resistance of the outgoing link to also be positive, then another network node will not respond to that positive resistance value and seek to provide the selected content, even if held. The application of the positive value helps to control the propagation of the resistance values through the network.

In one embodiment, the method comprises, on receipt of the selected content, performing at least one of caching and providing the selected content over the outgoing link having the resistance value set to the negative value. Accordingly, should the network node receive the selected content, then the selected content may be cached and/provided over the outgoing link which has the resistance value set for that selected content to a negative value.

According to a fourth aspect, there is provided a network node of a content-centric network, as claimed in claim 12.

In one embodiment, the logic is operable, when it is determined that the selected content is not cached, to set a resistance value allocated to incoming links with other network nodes when carrying packets associated with the selected content based on the resistance value allocated to the outgoing link.

In one embodiment, the logic is operable to the set the resistance value by applying a positive value offset for each incoming link to the resistance value allocated to the outgoing link.
In one embodiment, the logic is operable, on receipt of the selected content, to perform at least one of caching and providing the selected content over the outgoing link having the resistance value set to the negative value..

According to a claim 13 there is provided a computer program product operable, when executed on a computer, to perform the method steps of the first or third aspect.

Further particular and preferred aspects are set out in the accompanying dependent claims. Features of the dependent claims may be combined with features of the independent claims as appropriate, and in combinations other than those explicitly set out in the claims.
Where an apparatus feature is described as being operable to provide a function, it will be appreciated that this includes an apparatus feature which provides that function or which is adapted or configured to provide that function.

### BRIEF DESCRIPTION OF THE DRAWINGS

Embodiments of the present invention will now be described further, with reference to the accompanying drawings, in which:
Figures 1 to 5 illustrate the operation of an example of simplified content-centric network according to one embodiment; and
Figures 6 to 14 show in more detail an example simplified arrangement of a content-centric network and illustrate its operation during the transmission of an interest packet and the delivery of content in response.

### DESCRIPTION OF THE EMBODIMENTS

Before discussing the embodiments in any more detail, first an overview will be provided. When delivering content in an information-centric or content-centric network, the network mechanisms need to be able to locate a suitable source for the requested content and to transport it to the requesting network node efficiently and effectively. It is desirable for these location and transportation mechanisms to possess a number of different characteristics such as, for example, using a minimal amount of network resources, having a quick response time, being responsive to changes in the network layout, not relying on a centralised service, amongst others. Embodiments seek to provide such location and transportation mechanisms which seek to strike a balance between these characteristics. These mechanisms are particularly suited to name-based routing in highly mobile, sporadic networks that tend to have no centralised location services.

Embodiments implement a charge routing protocol where network traffic is routed by modelling a simplified electrical network. Network packets are assigned an electrical charge and the network links that they travel on are assigned an electrical resistance. As the packets propagate through the network their charge values will decrease in proportion to the resistance values of the links they use. Using this approach, the network packets are "punished" for occupying or utilising the links.

The content is typically named using a string or namespace. By convention, content originating from the same or a similar content source shares the first part of their name (i.e. they have a common prefix).

The resistance values for a link are typically set on a per-prefix basis and, thus, two packets that cross the same link but relate to different content may see different resistances. Likewise, the resistances may be set on a link direction basis. Thus, two packets relating to the same content may see different resistances when travelling the link in different directions.

Embodiments utilise two main mechanisms. The first is the use of a negative resistance. Network links may be assigned a negative resistance value on a per-prefix basis. By inverting the resistance on a network link, the network will change the punishment that a packet receives for crossing the link into a "reward", thus enticing content object packets to flow towards some destination that may be interested in caching them. The second is the use of push delivery where network nodes are allowed to deliver out of path content objects across network links even though no interest packet for that content has been received over that network link. In existing content-centric networks, such spurious traffic would be discarded by the receiving node because it has no pending interest recorded and, thus, does not know where to forward the content objects. This will still happen in embodiments, unless the resistance for the content objects prefix is less than zero on the incoming link. Accordingly, the use of sub-zero resistances may thus been seen as a persistent interest in some content, enabling that content to be transported across the network without requiring a specific interest packet to be generated to request it.

### Negative Resistance Values - Example Operation

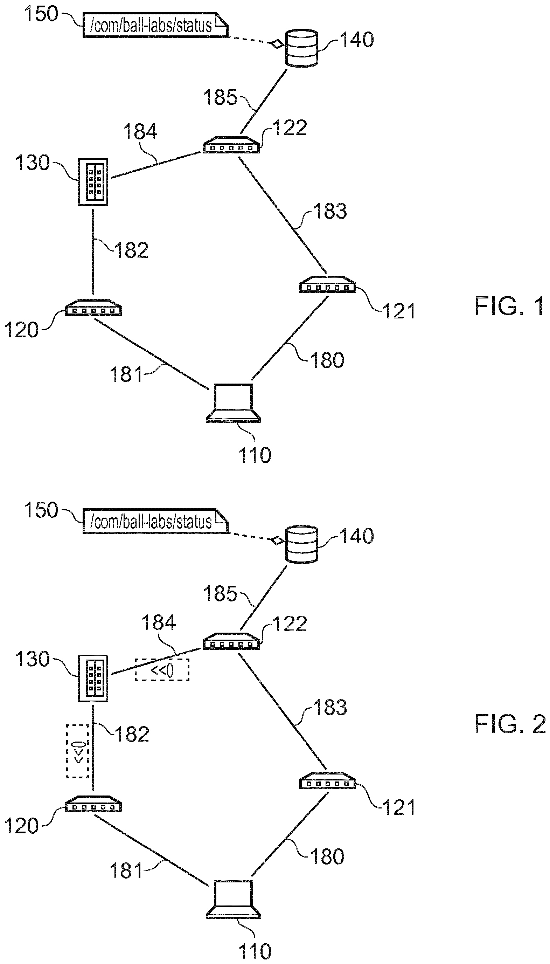

Figure 1 illustrates the operation of an example of simplified content-centric network according to one embodiment having a consumer 110, a producer 140, a piece of content 150, three non-pre-caching nodes (routers) 120-122, a pre-caching node 130 and six network links 180-185 interconnecting these nodes. The producer 140 has made content 150 available. The content 150 is identified by the namespace /*com*/*bell-labs*/*status.* The consumer 110 and the pre-caching node 130 are both currently idle. Only communication relevant to the namespace/*com*/*bell-labs*/*status* is shown in the figures and, thus, the namespace information has been left out of these illustrations.

Figure 2 illustrates the pre-caching node 130 lowering the resistance (illustrated by the values shown) on its incoming links for content that it wants to pre-cache. In particular, the pre-caching node 130 announces that it is interested in receiving content for the namespace prefix in question by lowering resistance values on its incoming links 182, 184 to below zero (signified by the "<<0" notation) for that namespace prefix (in this example /*com*/*bell-labs*/*status*)*.* Typically, such announcement is made using an update message which includes the prefix and the resistance value. As the producer 140 has not yet seen these adjustments and neither the router 122 nor the router 120 in the network which receive the update messages hold the content, the content is not yet sent to the pre-caching node 130.

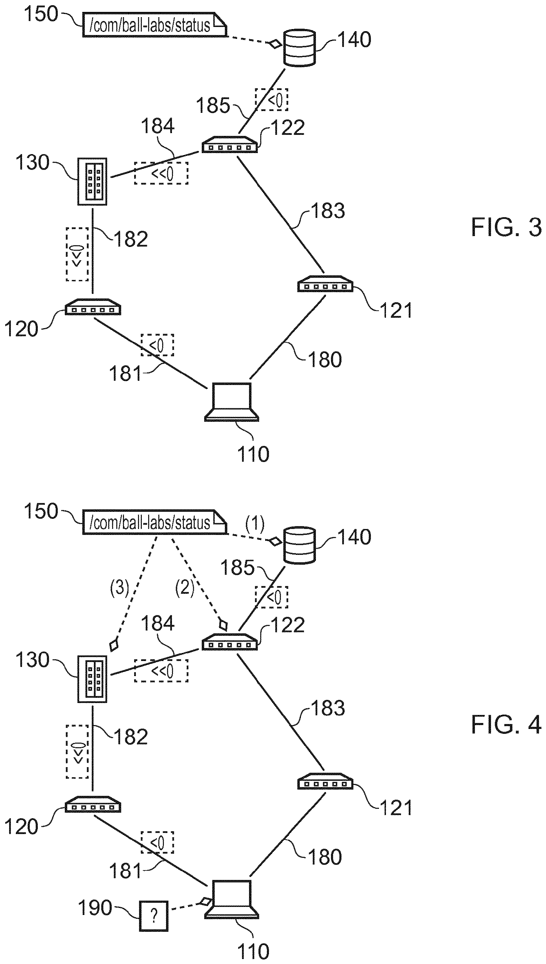

As can be seen in Figure 3, the routers 120, 122 adjacent to the pre-caching node 130 identify that they do not hold the content associated with the below zero resistance and so propagate the changes in resistance, adjusting for their local routing resistance settings for the prefix, by sending further update messages. Accordingly, the resistance adjustment announcements from the pre-caching node 130 propagate one step further. The two routers 120, 122 that forward the resistance adjustments will adjust the resistance values in them by adding their own bias for forwarding the traffic. This reflects the cost of routing the traffic over the incoming links 181, 185 to the routers 120, 122. In this example, the initial resistance values were far enough below zero that they still remain as negative, sub-zero values on the second-tier links 181, 185 as well. However, the resistance over these two links 18 1, 185 are closer to zero than before, signified by the "<0" notation. The resistance adjustments now propagate far enough that the content producer 140 sees them and discovers that it has content 150 that matches the prefix.

In Figure 4, the producer 140 transmits at step (1) the content 150 on the network link 185 with the sub-zero resistance for that content. It should be noted that no interest for the content has been received by the producer 150. Instead, the producer 150 responds to the sub-zero resistance value on its incoming link for content which it has stored. The router 122 receives the content and may choose to cache the content 150 before it forwards it at step (2) on its outgoing network links having a resistance value set below zero for that content. In this example, the router 122 forwards the content over the network link 184 to the pre-caching node 130. The pre-caching node 130 then receives at step (3) the content 150 and caches or creates a local copy of it.

Hence, it can be seen that the content first resides at the producer 140, then it reaches the router 122 and finally reaches the pre-caching node 130. The content is relayed across two different network links 185, 184 without being triggered by interests.

As mentioned above, the resistance values on the network links are not symmetric in both the incoming and outgoing directions, and only the incoming direction on link 182 had its resistance for the namespace prefix set to below zero. As the pre-caching node 130 does not have any outgoing sub-zero resistance links, it thus does not forward that content 150 any further.

Hence, it can be seen that the pre-caching node 130 can pre-emptively cache content locally without any interests for that content being generated. Instead, the pre-caching node can lower the resistance values on its incoming links for that content. The magnitude of the negative value will affect how far that negative value can propagate over links through the network. Should a network node have its outgoing link set to a negative resistance value and have the content associated with that resistance value stored locally, then this can be provided over that link. This enables content to be moved and positioned at required locations in advance of requests being made in order to enhance the operation of the network.

As can also been seen in Figure 4, the consumer 110 becomes interested in the content 150 and creates an interest 190 for it.

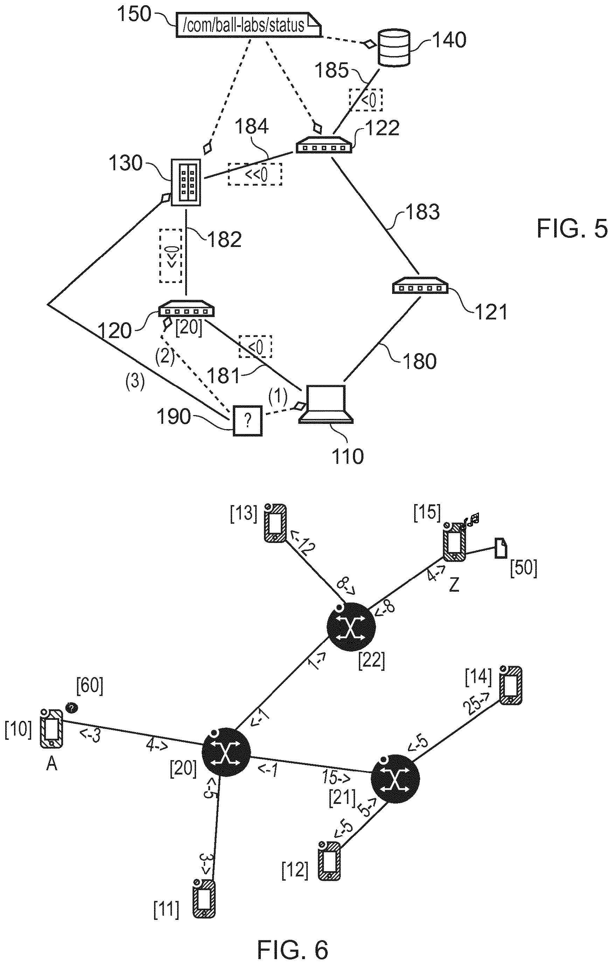

As illustrated in Figure 5, the consumer 110 routes its interest 190 on the outgoing link 181 because it has the lowest resistance for the namespace in question. Even though there is a definitive bias towards routing the interest 190 for the namespace on link 181, because the resistance value is less than zero, it can in fact be seen as a "reward" for routing interests for the namespace over that link. The consumer 110 is free to also try routing on other links if it considers that there is a better prospect of finding the content there. In fact, if the consumer 110 chooses to route an interest on both network links 180, 181, the charge of the interest on link 180 could be the same as if the pre-caching node 130 never existed, since there is no need to set a charge value above zero for the interest on link 181 (the routing of interest and content in response to those interests is discussed in more detail below).

In the example shown in Figure 5, the consumer 110 opts only to route the interest on network link 181. The interest is received by router 120 at step (2). The router 120 does not have the requested content but also has an outgoing link with a sub-zero resistance value associated with that content. Accordingly, the interest is forwarded over link 182 to the pre-caching node 130. At step (3) the interest 190 arrives at the pre-caching node 130, which will then proceed to route a copy of the content back to the consumer 110.

### Packet Charge

Embodiments seek to function in a similar manner to that of a 'lightning strike' to provide routing protocols for the transmission of data packets. During such lightning strikes, the electrical charge finds the best route from, for example, a negatively charged cloud to some suitably positively charged other cloud or part of the earth. The charge propagates along lines of least resistance without requiring prior knowledge about the conditions of the space between its origin and its destination. It also branches out during the strike along several lines of more or less resistance and then strikes along the line with least resistance.

Embodiments seek to provide similar characteristics for the transfer of data packets within a content-centric network. In such a content-centric network there are two basic types of data packets which are used for content delivery. The first is an interest (which are requests for named items of content), the second is the data (which are the content chunks which are delivered in response to an interest packet). Embodiments associate a charge (like an electrical charge) with each of these content-related packets transmitted within the network. In embodiments, interests typically have negative charges, whilst data typically has positive charges, although the reverse could equally be true. In addition, every link/prefix pair in the network (i.e. a communication path between two network nodes) has two resistances associated with it, one in each direction of data travel between the two network nodes. Nodes within the network are free to adjust the resistance of any of its incoming links as often as it likes in response to, for example, congestion, bandwidth utilisation, resource utilisation, etc. When a packet with a charge travels across a link, the magnitude of the charge will decrease, dependent on the resistance of the link. Thus, the further a packet travels, the weaker its charge will become as the magnitude tends towards zero or a 'neutral' charge. As with regular content-centric networks, interest packets may be split at any time and the charge of the interest packet is then shared between the newly-created interest packets.

When a node in the network issues an interest packet, it will generally follow the path in the network that has the least resistance (resistance may vary for different types of interest packets, depending on their prefix), but is likely to split and branch out from this path based on a statistical measure of how well-defined the path of least resistance is compared to other paths. This is similar to a lightning strike, where lightning leaders branch out from the tip of the lightning bolt to "feel" for the best path from a cloud to the ground. When an interest packet finds the source or a copy of the content it is requesting, the network node providing that content will construct a data packet and give it a charge to route it back to the requesting network node. Because the data charge is positive, where the interest charge is negative, the path taken by the interest from the content consumer to the content source will clearly stand out as the path of least resistance, allowing the data packet to find its way back. This is assisted by intervening network nodes storing a copy of each interest packet that passes through and associating the interest packet with the link over which the interest packet was received; this link may be used to route the content back to the content consumer. Also, where the interest packets find multiple sources or copies of the content at different locations, each of these may be provided back to the content consumer at the requesting node.

As a data packet is routed, any node may make a copy of it and store it for later delivery in response to other interest packets, in a similar way to other content-centric networks. However, in these embodiments the data packet's charge is stored along with the content of the data packet.

Just as in nature, these charges are not permanent. Any charge stored in the network (be it the interest charge or the data charge) decays with time and dies, exhausts or extinguishes when the charge goes below a minimum threshold level. The rate of decay may be linear or exponential or any other decay function. Thus, interests and content can be given a maximum age that they can be reliably stored, and best paths established for routing will fade when they are not used, thus increasing the likelihood of trying other paths rather than relying on stale routing information.

Accordingly, it can be seen that embodiments provide a multi-point-capable protocol that requires neither complete routing tables, nor an address resolution overlay to perform routing in a network with highly mobile content producers and consumers.

### Interest Packet and Content Delivery - Example Operation

Figures 6 to 12 show in more detail an example simplified arrangement of a content-centric network and illustrate its operation during the transmission of an interest packet and the delivery of content in response, which provides a replacement for an existing flooding-based discovery algorithm utilised in such content-centric networks - the following functionality is also employed within the example network described with reference to Figures 1 to 5 above. Mobile devices 10 to 15 are provided, together with router nodes 20 to 22. Content 50 is stored on the mobile device 15. Interest packets 60 to 66 are transmitted through the network and data packets 70 to 73 are sent back. The lines between network nodes are data communication links, with a resistance in each direction. Packets travel over each of the links. For the purpose of this embodiment, the links are assumed to provide reliable data transfer. Also, nodes are free to change the resistance of incoming links. When they do, they inform the network node at the other end of the link immediately.

### Interest Packet Propagation

Figure 6 illustrates the arrangement of the network before any request is made. Device 10 (A) wishes to receive a piece of content 50 located at device 15 (Z).

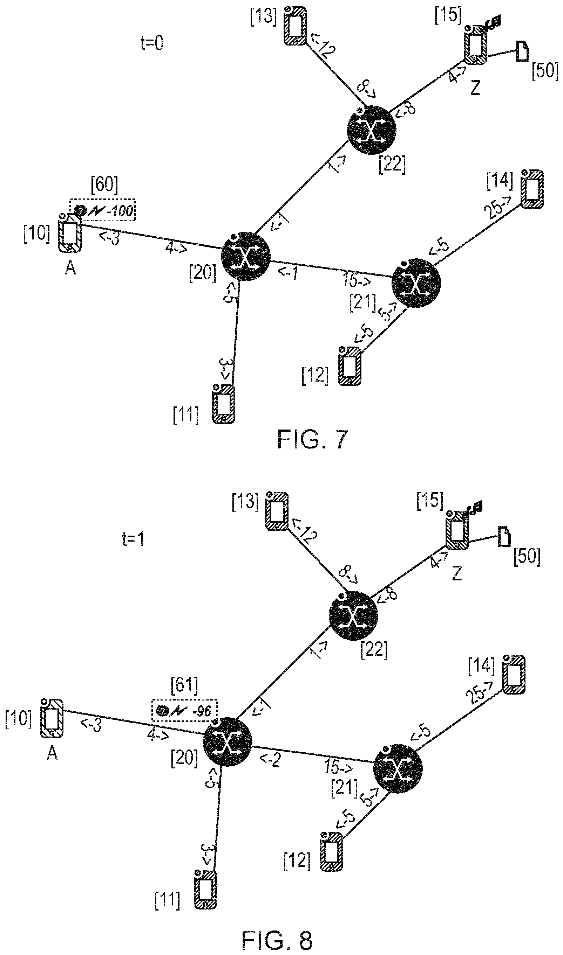

Figure 7 shows the arrangement of the network at time t=0. Device 10 creates an interest packet 60 that it can issue to the network to request the content 50. In this example, device 10 sets the initial transmission charge of the interest 60 to -100.

However, it will be appreciated that other charges may be selected. Increasing the magnitude of the charge has the effect of increasing the range of the interest packet. Likewise, decreasing the magnitude of the charge decreases the range of the interest packet.

Figure 8 shows the state of the network at time t=1. At this time, the interest packet 60 reaches the router node 20. The interest packet 60 reaches the router node 20 with a reduced received charge of -96, which was reduced due to the resistance of 4 of the link between the device 10 and the router node 20. It will be appreciated that the resistance may be specified in ways other than a simple arithmetic reduction, such as, for example, a percentage reduction or more complicated reduction in charge. The interest packet 60 is stored by the router node 20 with its received charge and details of the link over which the interest packet was received.

The router node 20 determines that it does not have the content requested by the interest packet 60. The router node 20 also has no notion of where the requested content might be. The node 20 decides to split the charge evenly and to route duplicated interest packets 62, 63, 64 on all its outgoing interfaces or links (in a similar manner to a pure flooding algorithm). Each interest packet 62, 63, 64 is thus forwarded from the router node 20 with an initial transmitted charge of -32. However, it will be appreciated that the router node 20 may split the charge other than equally and may split the charge depending on the resistance of the ongoing links in order to favour or avoid high or low resistance links.

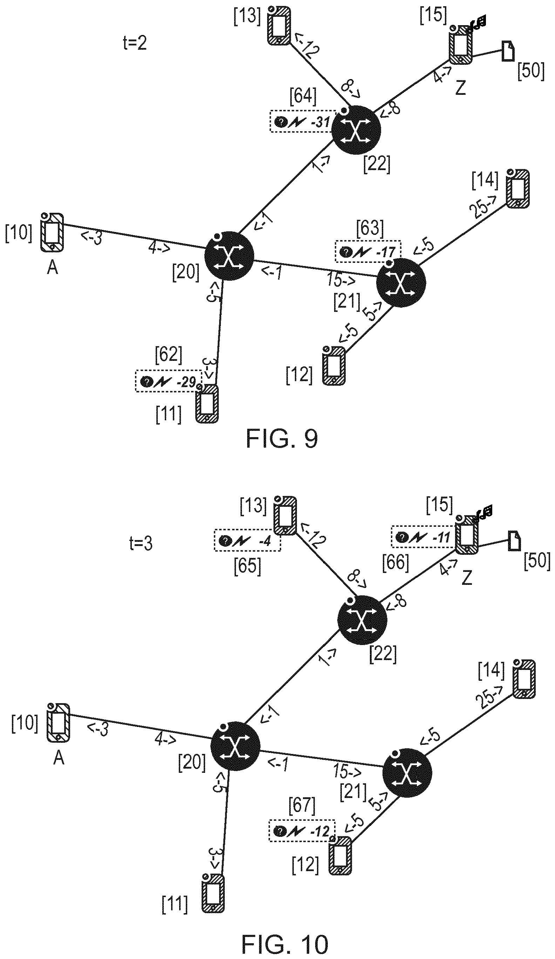

Figure 9 shows the arrangement of the network at time t=2. At this time, two more routers 21 and 22 and one device 11 are reached. Again, the interest packets lose charge when traversing each link, and so the received charge is now -17, -31 and -29 respectively because of the resistance of these links. The interest packets are stored by these nodes with their received charge and details of the link over which the interest packet was received. Again, none of the nodes 21, 22 or the device 11 have the requested content stored, so the routers 21 and 22 need to decide which interfaces or links to forward the interest packet on. The device 11 has no onward link and so can safely discard the interest packet. Both the routers 21 and 22 examine their onward links in order to determine how to propagate their interest packet.

Figure 10 shows the arrangement of the network at time t=3. The router 22 splits the charge of the interest packet 64 between two further duplicated interest packets 65 and 66. In this case, it was not possible to split the charge completely evenly and so slightly more charge was given to interest packet 65 than that given to interest packet 66. However, the network node 21 determines that the interest packet 63 had insufficient charge to be able to be equally split and transmitted over the onward link to the device 14. Hence, network node 21 has only one available onward link for the interest packet 63. Accordingly, a duplicated interest packet 67 with the complete received charge of the interest packet 63 is instead transmitted over the link to the device 12.

Neither the device 12, nor the device 13 has the requested content stored and these devices also have no onward links, so they can safely discard their received interest packets. However, the device 15 does have the requested content.

Hence, it can be seen that the interest packet is forwarded and duplicated by receiving nodes, and the initial charge is split during such duplication and reduced by the resistance of the links in order to constrain the distance that the interest packet travels and resources consumed searching for the content.

### Content Delivery

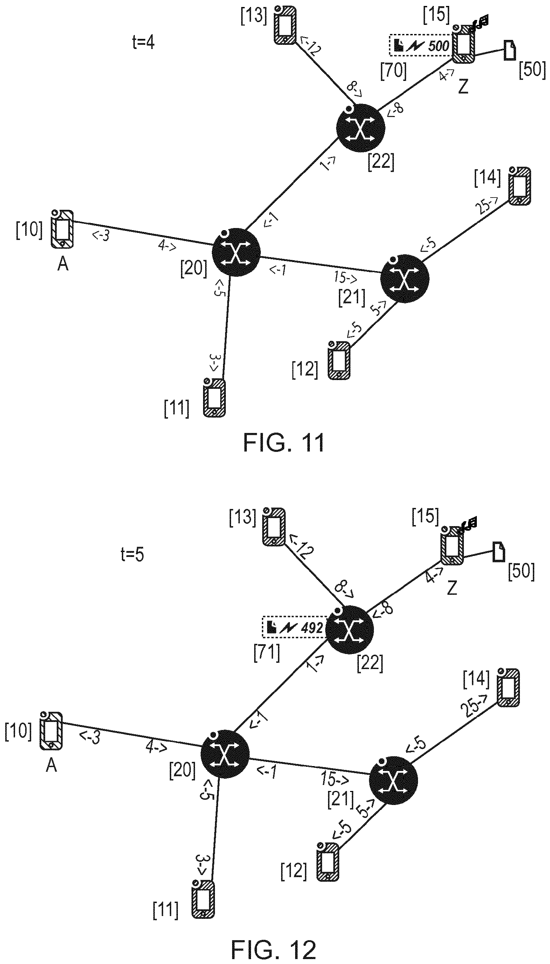

Figure 11 illustrates the state of the network at time t=4. The device 15 creates a data packet 70 containing the content and assigns it an initial charge of 500. The charge assigned to the content varies based on many factors and will typically influence how long that content is to be stored within the network. The data packet 70 is then sent out on the network interface or link that the interest packet 66 initially arrived on. It will be appreciated that the details of this link will have been stored by network nodes along with the interest packet.

Figure 12 illustrates the arrangement of the network at time t=5. The data packet arrives at the router node 22 with a reduced charge, which was reduced by the resistance of the link between the device 15 and the router node 22. The router node 22 decides to cache a copy of the data packet. This allows for faster delivery if another request for the same data is received in the future, as the data can then be delivered directly from the router node 22 without needing to contact the original source of the data, device 15.

The router node 22 determines that there is an interest packet related to the content packet and determines the link over which that interest packet was received. Accordingly, the router node 22 transmits the content packet 71 with a reduced charge since the charge is split between the content packet transmitted to router 20 and the content stored by the router 22.

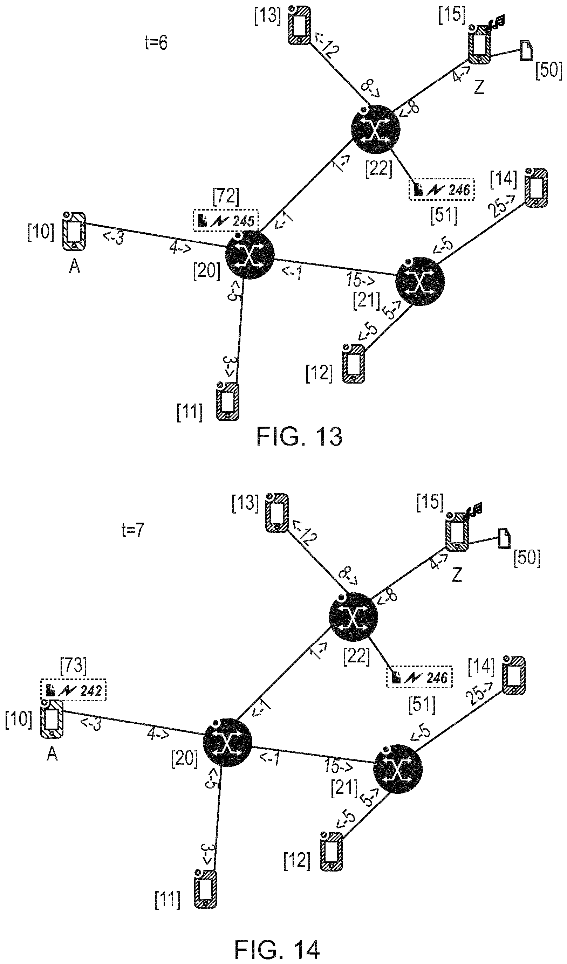

Figure 13 illustrates the arrangement of the network at time t=6. At this time, the router 20 has received the content packet 72 with a charge of 245. The router 20 determines that an interest packet is associated with this content and determines that the content should be forwarded over the link with device 10.

Figure 14 illustrates the arrangement of the network at time t=7. The content packet 73 is received at the device 10 with a charge of 242.

Accordingly, it can be seen that the interest packet was routed throughout the network by network nodes which had no idea where the content might be located. Likewise, the content is routed back via a direct route between the devices requesting and providing the content.

### Charge Decay

As time passes, the charges associated with the unfulfilled interest packets are decayed and those interest packets will be deleted once the charge is eliminated, exhausted or extinguished or falls below a threshold value. Likewise, the charge associated with the content will also decay until that charge is extinguished, at which point the content will be deleted.

### Resistance Values

When a device or router becomes congested, it should increase the resistance on its incoming links. When the congestion passes, or the router or device has been idle for some time, the resistance on its incoming links should be decreased gradually until it reaches a minimum threshold resistance value. The resistance may be adjusted for other reasons such as, for example, economic reasons.

The following describe various modifications that may be made to the embodiments described above.

It is possible to have different splitting policy for charges associated with data packets. For example, if the router 22 in Figure12 that handles the data packet at time t=5 believes the content to be particularly volatile, or for some other reason it wants a high turnover of items that it caches, it can split the charge in some other way such as, for example, 90/10 instead of 50/50, in order to reduce the time that that content is cached. Likewise, a router may choose to forward a data packet on a particularly low-resistance link, even if no negative charge for the content exists. This will allow content to disseminate pre-emptively in a way similar to how content delivery networks currently work.

It is also possible to set the resistance on links on a per-prefix basis instead of per link. It will be appreciated that the prefix is the first part of a name (for example, YouTube, BreakingNews, etc.) which identifies a content provider. This would allow a node to prioritise traffic from one source (for example, real-time video chat) over a link that is otherwise congested, by associating that prefix with a low resistance and other prefixes with a higher resistance. In conjunction with this enhancement, data packets propagating through the network may have their charges strengthened by the charge left behind by interest packets (that is, adding the charge of the associated interest packet to the charge of the content at a network node in order to reward them for following the correct path back to the originator of the request).

It is also possible to change the way that the charge stored in the network decays.

It is also possible that the way that the charge is reduced or decayed when traversing across a link can be effected based on a percentage change of the charge, rather than a numerical reduction. This means that the resistance may be expressed as a percentage rather than as an absolute number.

It is also possible that the resistance values can be piggy-backed onto any packet traversing the data links, so as to save the need to transmit update packets when the resistance value changes.

Embodiments respond quickly to heavily-loaded routes by raising resistance. They also automatically allow multi-point delivery as the interests are split up and the routers with the data respond, assuming they have the data. Multi-point delivery can therefore readily be achieved by sending interests for multiple parts of the data, or where the data is provided by multiple sources. In addition, embodiments can improve security by, for example, increasing the resistance for prefixes or for devices suspected to be adversarial.

Accordingly, it can be seen that embodiments provide a new routing algorithm for content-centric networks. The algorithm does not necessarily need to wait for routing table consensus amongst the nodes in the network, which makes it well suited to cater for highly-dynamic network environments where both content consumers and producers may be mobile. The protocol also responds quickly to changes and provides multi-point delivery capabilities. Furthermore, the protocol is very general in its ability to adapt because the main parameters can be adjusted according to many different policies, thus achieving a number of different goals such as, for example, fast adaptiveness, a high degree of caching, etc.

This approach utilises three main parameters that help the network to route efficiently in a highly dynamic environment: an interest charge (which can be considered to be the importance or priority of the interest), a data charge (which can be considered to be the reliability or age of the data), both of which are determined by the end points of the routing paths, as well as link resistances that are determined by the nodes that operate the links in question. Together, these three main parameters form a flexible and powerful tool that gives the network a highly-adaptive, multi-point-capable routing scheme.

It will be appreciated that embodiments differ to current approaches, as will be described in more detail below.

In a so-called 'pheromone-based' routing scheme, virtual "ants" travel on the network links and deposit trace amounts of a virtual hormone (the pheromone). The more ants travel across a link, the more pheromone will be deposited. As the hormone acts as an attractor to other ants, this again will cause more ants to use the link. By starting out with a pheromone-free network and ants roaming at random, the network will converge toward using the links that provide the ants with the content they are looking for (their "food") the quickest, because faster delivery times means that more ants can travel on the link and thus deposit more pheromone. Over time, the pheromone traces evaporate, if they are not replenished, and the ants will be more likely to try other routes. If the food source is moved, ants will still go to the location where it used to be, and start a random search from there.

Pheromone-based routing schemes are very efficient at establishing a routing path in a network where they know nothing of the topology. In general, however, they are not very good at adapting to changing environments, because well-established links full of pheromone are chosen ahead of new, better routes, for a long time and also suffer from the fault that they can converge to non-optimal routes (though some approaches decrease the likelihood of this happening). They also do not handle multi-point delivery well; as a matter of fact they tend to converge away from multi-point delivery as the most travelled route constant gets more pheromone than less travelled routes and thus increasingly get chosen.

One approach re-implements Mobile IP in a content centric network (CCN)-based network. Every content producer, A, in the network is assigned a "home" content router that will always be contacted when one wants to retrieve content from A. A must then inform its home content router of its whereabouts in the network such that traffic can be forwarded to it.

This approach, and most like it, improves on the time it takes for the routing tables in a CCN network to reach a sane state after a node has moved. However, it introduces an added layer of complexity by needing update and acknowledgement messages passed between nodes and their home content routers. It also increases the amount of traffic that needs to be transferred in the network as a whole because of the redirection of data from the content router to A. Finally, it assumes that every content producer in the network can be assigned a "home" content router, which in essence merely moves the problem of where to implement network dynamicity one step further into the cloud rather than tackling the root of the problem.

A Gradient Routing in Ad Hoc Networks (GRAd) algorithm has some similarities to the embodiments mentioned above: The nodes in the network establish a least-cost route (from one node to another) and communication will avail of that route once established. When routes are disused, they decay and must after some timeout be reestablished. The setting of this timeout determines the trade-off between bandwidth used to exchange routing information and resilience to changes in the topology. GRAd is meant for radio networks, and thus relies on hop counts determined by broadcasts to calculate least-cost routes.

Like the pheromone-based networking, GRAd relies solely on a single path between producer and consumer once such a path has been found. It also has no means for nodes in the network to determine a "cost" for routing - either a link exists or it does not. And finally, it does not support the multi-point delivery made possible with CCN.

Accordingly, it can be seen that embodiments provide a model resembling content delivery networks available on the internet currently. This presents new opportunities for network providers to optimise content delivery in their networks or even create business models resembling current content delivery networks.

In particular, embodiments enable the pre-caching of content or content delivery networks to be performed in content-centric networks that implement charge routing. This has several advantages. Unutilised bandwidth can be used to pre-cache content in expectation of demand. Network operators gain flexibility in configuration and optimisation of their network "suggestions" for optimised traffic routes in the network. Network operators gain a business opportunity for selective pre-caching, just as with existing content delivery networks, but without the middle man that is common in current content delivery network implementations. Thus, this provides for a competitive alternative to TCP/IP as an internet-wide routing protocol by giving current network functionality a viable migration path.

It would be appreciated that sub-zero resistance values do not displace the normal operations of a charge routing-enabled content-centric network. If the chosen caches are inconvenient or restrictive for the users, normal traffic in the network will still be routed as if they were not there. This simply provides an opportunity to fine-tune or optimise network traffic flow to the benefit of both users and operators. This approach does not force traffic to be re-routed to a specific cache like current content delivery network architectures, so even if the nearest cached copy is offline or overloaded (unresponsive), an alternative will be provided if it exists in the network, just as with existing content-centric networks. In addition, unlike current content delivery networks, the implementation of the sub-zero resistance charge routine is completely transparent to the users of the network. Thus, caches may be spontaneously created, dismantled or changed as network traffic changes. Furthermore, unlike existing content delivery networks, embodiments allow both commercial and optimisation-orientated cache deployment. Content producers may, for example, pay a cache operator to pre-emptively cache any content they produce in order to provide timely and reliable service to their customers. Conversely, network providers can provide adaptive caches that express sub-zero resistance values for highly popular or difficult to reach content in order to provide an in-network cache and, thus, lower operating costs.

A person of skill in the art would readily recognize that steps of various above-described methods can be performed by programmed computers. Herein, some embodiments are also intended to cover program storage devices, e.g., digital data storage media, which are machine or computer readable and encode machine-executable or computer-executable programs of instructions, wherein said instructions perform some or all of the steps of said above-described methods. The program storage devices may be, e.g., digital memories, magnetic storage media such as a magnetic disks and magnetic tapes, hard drives, or optically readable digital data storage media. The embodiments are also intended to cover computers programmed to perform said steps of the above-described methods.

The functions of the various elements shown in the Figures, including any functional blocks labelled as "processors" or "logic", may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" or "logic" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non-volatile storage. Other hardware, conventional and/or custom, may also be included. Similarly, any switches shown in the Figures are conceptual only. Their function may be carried out through the operation of program logic, through dedicated logic, through the interaction of program control and dedicated logic, or even manually, the particular technique being selectable by the implementer as more specifically understood from the context.

It should be appreciated by those skilled in the art that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

The description and drawings merely illustrate the principles of the invention. It will thus be appreciated that those skilled in the art will be able to devise various arrangements that, although not explicitly described or shown herein, embody the principles of the invention and are included within its scope. Furthermore, all examples recited herein are principally intended expressly to be only for pedagogical purposes to aid the reader in understanding the principles of the invention and the concepts contributed by the inventor(s) to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

## Claims

1. A method for a pre-caching network node (130) of a content-centric network, the method comprising:
when it is determined that selected content (150) is to be pre-cached by said pre-caching network node, setting a resistance value allocated to incoming links (184; 182) with other network nodes when carrying packets associated with said selected content to a negative value, wherein said resistance value identifies an adjustment to be made to a charge associated with said packets, said negative value causing an increase in said charge when traversing one of said incoming links, a magnitude of said charge value affecting how far said packets are able to propagate throughout said content-centric network.

2. The method of claim 1, wherein said resistance value is set to a magnitude of negative value based on at least one of a priority for pre-caching said selected content and a propagation distance through said content-centric network.

3. The method of any preceding claim, wherein each of said incoming links has a plurality of resistance values, each allocated for different selected content.

4. The method of any preceding claim, comprising:
caching received selected content when said resistance value allocated to said selected content has a negative value.

5. The method of any preceding claim, wherein said setting said resistance value comprises transmitting an update message over each incoming link identifying said resistance value and said selected content.

6. The method of any preceding claim, wherein said packets comprise at least one of an interest packet requesting said selected content and content packets carrying said content.

7. A pre-caching network node (130) of a content-centric network comprising:
logic operable, when it is determined that selected content (150) is to be pre-cached by said pre-caching network node, to set a resistance value allocated to incoming links (184; 182) with other network nodes when carrying packets associated with said selected content to a negative value, wherein said resistance value identifies an adjustment to be made to a charge associated with said packets, said negative value causing an increase in said charge when traversing one of said incoming links, a magnitude of said charge value affecting how far said packets are able to propagate throughout said content-centric network.

8. A method for a network node (120 - 140) of a content-centric network, the method comprising:
when it is detected that a resistance value allocated to an outgoing link (180 - 185) with another network node when carrying packets associated with selected content (150) has been set to a negative value, determining whether said network node (120-140) has said selected content cached and when it is determined that said selected content is cached providing said selected content over said outgoing link, wherein said resistance value identifies an adjustment to be made to a charge associated with said packets, said negative value causing an increase in said charge when traversing said outgoing link, a magnitude of said charge value affecting how far said packets are able to propagate throughout said content-centric network.

9. The method of claim 8, wherein when it is determined that said selected content is not cached, the method comprises setting a resistance value allocated to incoming links with other network nodes when carrying packets associated with said selected content based on said resistance value allocated to said outgoing link.

10. The method of claim 9, wherein said setting said resistance value comprises applying a positive value offset for each incoming link to said resistance value allocated to said outgoing link.

11. The method of any one of claims 8 to 10, comprising, on receipt of said selected content, performing at least one of caching and providing said selected content over said outgoing link having said resistance value set to said negative value.

12. A network node (120 - 140) of a content-centric network, comprising:
logic operable, when it is detected that a resistance value allocated to an outgoing link (180 - 185) with another network node when carrying packets associated with selected content has been set to a negative value, to determine whether said network node (120-140) has said selected content cached and when it is determined that said selected content is cached providing said selected content over said outgoing link, wherein said resistance value identifies an adjustment to be made to a charge associated with said packets, said negative value causing an increase in said charge when traversing said outgoing link, a magnitude of said charge value affecting how far said packets are able to propagate throughout said content-centric network.

13. A computer program product operable, when executed on a computer, to perform the method of any one of claims 1 to 7 or 8 to 11.

## Patentansprüche

1. Verfahren für einen Pre-Caching-Netzwerkknoten (130) eines Content-zentrierten Netzwerks, wobei das Verfahren umfasst:
wenn bestimmt wird, dass ausgewählter Content (150) zwischengespeichert werden muss mittels besagten Pre-Caching-Netzwerkknotens, Einstellen eines Widerstandswerts, der eingehenden Links (184; 182) zugewiesen wird mit anderen Netzwerkknoten, wenn Pakete transportiert werden, die mit besagtem ausgewählten Content verbunden sind, auf einen negativen Wert, wobei besagter Widerstandswert eine Einstellung identifiziert, die an einer Ladung durchgeführt werden muss, die mit besagten Paketen verbunden ist, wobei besagter negativer Wert eine Erhöhung in besagter Ladung bewirkt, wenn einer besagter eingehender Links durchlaufen wird, wobei eine Größe besagten Ladungswerts beeinflusst, wie weit besagte Pakete in der Lage sind, sich durch besagtes content-zentrierte Netzwerk auszubreiten.

2. Verfahren nach Anspruch 1, wobei besagter Widerstandswert eingestellt wird auf eine Größe mit negativem Wert auf Grundlage mindestens einer Priorität für das Pre-Caching besagten ausgewählten Contents und einer Ausbreitungsdistanz durch besagtes content-zentriertes Netzwerk.

3. Verfahren nach einem beliebigen der vorhergehenden Ansprüche, wobei jeder besagter eingehender Links eine Vielzahl von Widerstandswerten aufweist und wobei jeder für unterschiedliche ausgewählte Contents zugewiesen wird.

4. Verfahren nach einem beliebigen der vorstehenden Ansprüche, umfassend:
Caching des empfangenen ausgewählten Contents, wenn besagter Widerstandswert, der besagtem ausgewähltem Content zugewiesen wird, einen negativen Wert aufweist.

5. Verfahren nach einem beliebigen der vorhergehenden Ansprüche, wobei besagtes Einstellen besagten Widerstandswerts umfasst das Übertragen einer Aktualisierungsnachricht über jeden eingehenden Link unter Identifizieren besagten Widerstandswerts und besagten ausgewählten Content.

6. Verfahren nach einem beliebigen der vorhergehenden Ansprüche, wobei besagte Pakete mindestens ein interessierendes Paket umfassen, das besagten ausgewählten Content anfordert, und Content-Pakete, die besagten Content transportieren.

7. Pre-Caching-Netzwerkknoten (130) eines content-zentrierten Netzwerks, umfassend:
eine Logik, die betreibbar ist, wenn bestimmt wird, dass ausgewählter Content (150) zwischengespeichert werden muss mittels besagten Pre-Caching-Netzwerkknotens, zum Einstellen eines Widerstandswerts, der eingehenden Links (184; 182) zugewiesen wird mit anderen Netzwerkknoten, wenn Pakete transportiert werden, die mit besagtem ausgewählten Content verbunden sind, auf einen negativen Wert, wobei besagter Widerstandswert eine Einstellung identifiziert, die an einer Ladung durchgeführt werden muss, die mit besagten Paketen verbunden ist, wobei besagter negativer Wert eine Erhöhung in besagter Ladung bewirkt, wenn einer besagter eingehender Links durchlaufen wird, wobei eine Größe besagten Ladungswerts beeinflusst, wie weit besagte Pakete in der Lage sind, sich durch besagtes content-zentrierte Netzwerk auszubreiten.

8. Verfahren für einen Netzwerkknoten (120-140) eines content-zentrierten Netzwerks, wobei das Verfahren umfasst:
wenn festgestellt wird, dass ein Widerstandswert, der einem ausgehenden Link (180-185) mit einem anderen Netzwerkknoten zugewiesen wurde, wenn Pakete transportiert werden, die mit ausgewähltem Content (150) verbunden sind, auf einen negativen Wert eingestellt worden ist, zum Bestimmen, ob besagter Netzwerkknoten (120-140) besagten ausgewählten Content zwischengespeichert hat, und wenn bestimmt wird, dass besagter ausgewählter Content zwischengespeichert worden ist, zum Bereitstellen besagten ausgewählten Contents über besagten ausgehenden Link, wobei besagter Widerstandswert eine Einstellung identifiziert, die an einer Ladung durchgeführt werden muss, die mit besagten Paketen verbunden ist, wobei ein negativer Wert eine Erhöhung in besagter Ladung bewirkt, wenn besagter ausgehender Link durchlaufen wird, wobei eine Größe besagten Ladungswerts beeinflusst, wie weit besagte Pakete in der Lage sind, sich durch besagtes content-zentriertes Netzwerk auszubreiten.

9. Verfahren nach Anspruch 8, wobei, wenn bestimmt wird, dass besagter ausgewählter Content nicht zwischengespeichert wurde, das Verfahren umfasst das Einstellen eines Widerstandswerts, der eingehenden Links mit anderen Netzwerkknoten zugewiesen wird, wenn sie Pakete transportieren, die mit besagtem ausgewählten Content verbunden sind auf Grundlage besagten Widerstandswerts, der besagtem ausgehenden Link zugewiesen ist.

10. Verfahren nach Anspruch 9, wobei besagtes Einstellen besagten Widerstandswerts umfasst das Anwenden eines positiven Offsetwerts für jeden eingehenden Link auf besagten Widerstandswert, der besagtem ausgehenden Link zugewiesen ist.

11. Verfahren nach einem beliebigen der Ansprüche 8 bis 10, umfassend:
bei Erhalten besagten ausgewählten Contents, Durchführen mindestens eines aus Caching und Bereitstellen besagten ausgewählten Contents über besagten ausgehenden Link, wobei besagter Widerstandswert auf besagten negativen Wert eingestellt worden ist.

12. Netzwerkknoten (120, 140) eines content-zentrierten Netzwerks, umfassend:
Logik, betreibbar, wenn festgestellt wird, dass ein Widerstandswert, der einem ausgehenden Link (180-185) mit einem anderen Netzwerkknoten zugewiesen wurde, wenn Pakete transportiert werden, die mit ausgewähltem Content verbunden sind, auf einen negativen Wert eingestellt worden ist, zum Bestimmen, ob besagter Netzwerkknoten (120-140) besagten ausgewählten Content zwischengespeichert hat, und wenn bestimmt wird, dass besagter ausgewählter Content zwischengespeichert worden ist, zum Bereitstellen besagten ausgewählten Contents über besagten ausgehenden Link, wobei besagter Widerstandswert eine Einstellung identifiziert, die an einer Ladung durchgeführt werden muss, die mit besagten Paketen verbunden ist, wobei ein negativer wert eine Erhöhung in besagter Ladung bewirkt, wenn besagter ausgehender Link durchlaufen wird, wobei eine Größe besagten Ladungswerts beeinflusst, wie weit besagte Pakete in der Lage sind, sich durch besagtes Content-zentriertes Netzwerk auszubreiten.

13. Computerprogramm-Produkt, betreibbar für das Durchführen des Verfahrens eines beliebigen der Ansprüche 1 bis 7 oder 8 bis 11, wenn es auf einem Computer ausgeführt wird.

## Revendications

1. Procédé destiné à un noeud de réseau de mise en mémoire cache préalable (130) d'un réseau orienté contenu, le procédé comprenant l'étape suivante :
lorsqu'il est déterminé que le contenu sélectionné (150) doit être mis préalablement en mémoire cache par ledit noeud de réseau de mise en mémoire cache préalable, définir une valeur de résistance allouée aux liaisons entrantes (184; 182) depuis les autres noeuds de réseau lors de l'acheminement de paquets associés audit contenu sélectionné sur une valeur négative, ladite valeur de résistance identifiant un réglage à effectuer sur une taxe associée auxdits paquets, ladite valeur négative provoquant une augmentation de ladite taxe lors de la traversée de l'une desdites liaisons entrantes, l'amplitude de ladite valeur de taxe affectant la distance sur laquelle lesdits paquets peuvent se propager au sein dudit réseau orienté contenu.

2. Procédé selon la revendication 1, dans lequel ladite valeur de résistance est définie sur une amplitude de valeur négative en fonction d'au moins un élément parmi une priorité de mise en cache préalable dudit contenu sélectionné et une distance de propagation au sein dudit réseau orienté contenu.

3. Procédé selon l'une quelconque des revendications précédentes, dans lequel chacune desdites liaisons entrantes a une pluralité de valeurs de résistance, chacune étant allouée à un contenu sélectionné différent.

4. Procédé selon l'une quelconque des revendications précédentes, comprenant l'étape suivante :
mettre en mémoire cache le contenu sélectionné reçu lorsque ladite valeur de résistance allouée audit contenu sélectionné a une valeur négative.

5. Procédé selon l'une quelconque des revendications précédentes, dans lequel ladite définition de ladite valeur de résistance comprend la transmission d'un message de mise à jour sur chaque liaison entrante identifiant ladite valeur de résistance et ledit contenu sélectionné.

6. Procédé selon l'une quelconque des revendications précédentes, dans lequel lesdits paquets comprennent au moins un élément parmi un paquet *Interest* de requête dudit contenu sélectionné et des paquets de contenu transportant ledit contenu.

7. Noeud de réseau de mise en mémoire cache préalable (130) d'un réseau orienté contenu comprenant :
une logique permettant, lorsqu'il est déterminé que le contenu sélectionné (150) doit être mis préalablement en mémoire cache par ledit noeud de réseau de mise en mémoire cache préalable, de définir une valeur de résistance allouée aux liaisons entrantes (184 ; 182) depuis les autres noeuds de réseau lors de l'acheminement de paquets associés audit contenu sélectionné sur une valeur négative, ladite valeur de résistance identifiant un réglage à effectuer sur une taxe associée auxdits paquets, ladite valeur négative provoquant une augmentation de ladite taxe lors de la traversée de l'une desdites liaisons entrantes, l'amplitude de ladite valeur de taxe affectant la distance sur laquelle lesdits paquets peuvent se propager au sein dudit réseau orienté contenu.

8. Procédé destiné à un noeud de réseau (120 - 140) d'un réseau orienté contenu, le procédé comprenant l'étape suivante :
lorsqu'il est détecté qu'une valeur de résistance allouée à une liaison sortante (180 - 185) vers un autre noeud de réseau lors de l'acheminement de paquets associés à un contenu sélectionné (150) a été définie sur une valeur négative, déterminer si ledit noeud de réseau (120 - 140) dispose dudit contenu sélectionné en cache et lorsqu'il est déterminé que ledit contenu sélectionné est présent en cache transmettre ledit contenu sélectionné sur ladite liaison sortante, ladite valeur de résistance identifiant un réglage à effectuer sur une taxe associée auxdits paquets, ladite valeur négative provoquant une augmentation de ladite taxe lors de la traversée de ladite liaison sortante, l'amplitude de ladite valeur de taxe affectant la distance sur laquelle lesdits paquets peuvent se propager au sein dudit réseau orienté contenu.

9. Procédé selon la revendication 8, dans lequel lorsqu'il est déterminé que ledit contenu sélectionné n'est pas présent en cache, le procédé comprend la définition d'une valeur de résistance allouée aux liaisons entrantes depuis les autres noeuds du réseau lors de l'acheminement de paquets associés audit contenu sélectionné en fonction de ladite valeur de résistance allouée à ladite liaison sortante.

10. Procédé selon la revendication 9, dans lequel ladite définition de ladite valeur de résistance comprend l'application d'un décalage de valeur positif pour chaque liaison entrante à ladite valeur de résistance allouée à ladite liaison sortante.

11. Procédé selon l'une quelconque des revendications 8 à 10, comprenant, à la réception dudit contenu sélectionné, la réalisation d'au moins une action parmi la mise en cache et la transmission dudit contenu sélectionné sur ladite liaison sortante dont ladite valeur de résistance est définie sur une valeur négative.

12. Noeud de réseau (120 - 140) d'un réseau orienté contenu, comprenant :
une logique permettant, lorsqu'il est détecté qu'une valeur de résistance allouée à une liaison sortante (180 - 185) vers un autre noeud de réseau lors de l'acheminement de paquets associés au contenu sélectionné a été définie sur une valeur négative, de déterminer si ledit noeud de réseau (120 - 140) dispose dudit contenu sélectionné en cache et lorsqu'il est déterminé que ledit contenu sélectionné est présent en cache transmettre ledit contenu sélectionné sur ladite liaison sortante, ladite valeur de résistance identifiant un réglage à effectuer sur une taxe associée auxdits paquets, ladite valeur négative provoquant une augmentation de ladite taxe lors de la traversée de ladite liaison sortante, l'amplitude de ladite valeur de taxe affectant la distance sur laquelle lesdits paquets peuvent se propager au sein dudit réseau orienté contenu.

13. Produit-programme informatique permettant, lorsqu'il est exécuté sur un ordinateur, de mettre en oeuvre le procédé selon l'une quelconque des revendications 1 à 7 ou 8 à 11.
